(19) Europäisches Patentamt
European Patent Office
Office européen des brevets

(11) **EP 3 604 241 B1**

(12) **EUROPEAN PATENT SPECIFICATION**

(45) Date of publication and mention
of the grant of the patent:
**09.11.2022 Bulletin 2022/45**

(21) Application number: **18771298.9**

(22) Date of filing: **19.03.2018**

(51) International Patent Classification (IPC):
$C03B\ 23/03^{(2006.01)}$    $B60R\ 11/02^{(2006.01)}$
$C03C\ 17/23^{(2006.01)}$    $C03C\ 17/28^{(2006.01)}$
$G02B\ 5/08^{(2006.01)}$    $G02B\ 27/01^{(2006.01)}$
$C03C\ 3/083^{(2006.01)}$    $C03B\ 1/00^{(2006.01)}$
$C03C\ 3/085^{(2006.01)}$    $C03C\ 3/087^{(2006.01)}$
$C03C\ 17/09^{(2006.01)}$    $C03C\ 19/00^{(2006.01)}$
$C03C\ 21/00^{(2006.01)}$

(52) Cooperative Patent Classification (CPC):
**C03C 19/00; C03B 23/0357; C03C 3/083;
C03C 3/085; C03C 3/087; C03C 17/09;
C03C 21/00; G02B 5/0221; G02B 27/0101;**
C03C 2217/256; G02B 2027/0194; Y02P 40/57

(86) International application number:
**PCT/JP2018/010913**

(87) International publication number:
**WO 2018/174033 (27.09.2018 Gazette 2018/39)**

(54) **HEAD-UP DISPLAY DEVICE AND USE OF GLASS PLATE FOR MOBILE BODIES**

HEAD-UP-ANZEIGEVORRICHTUNG UND VERWENDUNG EINER GLASPLATTE FÜR MOBILE KÖRPER

DISPOSITIF D'AFFICHAGE TÊTE HAUTE ET UTILISATION D'UNE PLAQUE DE VERRE POUR LES CORPS MOBILES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.03.2017 JP 2017058205**

(43) Date of publication of application:
**05.02.2020 Bulletin 2020/06**

(73) Proprietor: **AGC Inc.**
**Chiyoda-ku**
**Tokyo 100-8405 (JP)**

(72) Inventors:
• **KANASUGI Satoshi**
**Tokyo 100-8405 (JP)**

• **SAKAI Yusuke**
**Tokyo 100-8405 (JP)**
• **FUKUSHI Takanori**
**Tokyo 100-8405 (JP)**

(74) Representative: **Müller-Boré & Partner**
**Patentanwälte PartG mbB**
**Friedenheimer Brücke 21**
**80639 München (DE)**

(56) References cited:
**WO-A1-2011/004844    JP-A- 2009 269 762**
**JP-A- 2011 138 589    JP-A- 2016 511 738**
**JP-A- 2016 521 245    US-A1- 2016 039 705**

**Description**

TECHNICAL FIELD

The present invention relates to a head-up display device and the use of a glass plate for a mobile body .

BACKGROUND ART

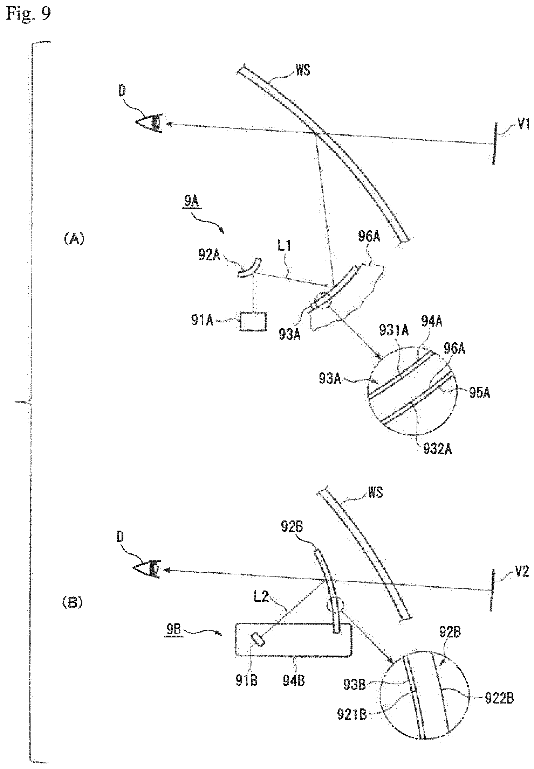

Conventionally, a type shown in part (A) of Fig. 9 (hereinafter referred to as a "windshield-type") and a type shown in part (B) of Fig. 9 (hereinafter referred to as a "combiner-type") are known as head-up display devices (hereinafter referred to as "HUD devices") for displaying various kinds of information on the windshield of a mobile body such as a vehicle.

In the windshield-type HUD device 9A, image forming light L1 emitted from a projector 91A is reflected by a path-folding mirror 92A and a reflection mirror 93A to be projected onto a windshield WS, and thus displayed on the opposite side of the windshield WS to a user D as a virtual image V1.

In the combiner-type HUD device 9B, image forming light L2 emitted from a projector 91B is projected onto a combiner 92B and displayed on the opposite side of the combiner 92B to a user D as a virtual image V2.

For example, a bent glass plate as disclosed in Patent literature 1 is known as a glass that is used as the reflection mirror 93A of the windshield-type HUD device 9A.

The arithmetic mean roughness of each of a first main surface and a second main surface of the bent glass plate disclosed in Patent literature 1 is 5 nm or smaller.

In JP 2009 269762 A, a method for manufacturing a glass substrate for a magnetic disk in a ring form having a center hole is described. The method includes steps of: forming a first cut region having a center line average roughness Ra of 0.1-50 nm, corresponding to the radius of the center hole diameter; forming a second cut region having a center line average roughness Ra of 0.1-50 nm, concentric with the first cut region, in an outer peripheral part on one surface of the disk-like glass raw material; forming cut lines in the first and second cut regions; and cutting the glass raw material along the cut lines to remove the center part and outer peripheral edge of the glass raw material.

In JP 2011 138589 A, a method for manufacturing a glass substrate for magnetic disk having a pair of principal surfaces is described. The method includes: a glass blank molding step to mold a glass blank which is equipped with a first principal surface having surface roughness Ra of 0.01-10 $\mu$m and a second principal surface having surface roughness Ra of 0.005 $\mu$m or less and which has flatness necessary for a glass substrate for a magnetic disk, by press-molding a molten or softened glass; and a surface machining step to machine only the first principal surface of the glass blank.

CITATION LIST

PATENT LITERATURE

Patent literature 1: JP-A-2016-37446

SUMMARY OF INVENTION

TECHNICAL PROBLEM

In the case where the bent glass plate disclosed in Patent literature 1 is used as the reflection mirror 93A, it is conceivable to form a reflection layer 94A on a concave surface side first main surface 931A and fix a convex surface side second main surface 932A to a support member 96A via an adhesive layer 95A, as shown in part (A) of Fig. 9. With this configuration, the resolution of the virtual image V1 can be made high because the second main surface 932A is 5 nm or smaller in arithmetic mean roughness and is thus high in smoothness.

However, since the arithmetic mean roughness of the second main surface 932A is 5 nm or smaller, there may occur an event that ability of the second main surface 932A to hold the adhesive layer 95A becomes insufficient during long-term use, as a result of which the reflection mirror 93A comes off the support member 96A.

In the case where the bent glass plate disclosed in Patent literature 1 is used as the combiner 92B, it is conceivable to form a semi-transparent reflection layer 93B on a concave surface side first main surface 921B and support an end portion of the combiner 92B rotatably or un-rotatably by a unit 94B, as shown in part (B) of Fig. 9. Also with this configuration, the resolution of the virtual image V2 can be made high because the second main surface 922B is high in smoothness.

However, since the arithmetic mean roughness of the second main surface 922B is 5 nm or smaller, external light that enters on the second main surface 922B from outside the glass plate goes toward the user D side immediately, possibly lowering the visibility of the virtual image V2. Furthermore, when part of image forming light L2 that is projected onto the first main surface 921B passes through the first main surface 921B and enters on the second main surface 922B from the first main surface 921B side, since the arithmetic mean roughness of the second main surface 922B is 5 nm or smaller, the part of the image forming light L2 is reflected by the second main surface 922B and forms a double image, possibly lowering the visibility of the virtual image V2.

An object of the present invention is to provide a use of a glass plate for a mobile body and a head-up display device that are capable of increasing the resolution of an image formed by image forming light going toward the first main surface.

SOLUTION TO PROBLEM

A glass plate for a mobile body according to an aspect has a bent portion and is to be installed in the mobile body, in which the glass plate has an arithmetic mean roughness $Ra_1$ (nm) of a first main surface of the glass plate and an arithmetic mean roughness $Ra_2$ (nm) of a second main surface of the glass plate that satisfy the Relation (1) shown below, and $Ra_1$ is 5 nm or smaller and $Ra_2$ is larger than 5 nm:

$$Ra_2 - Ra_1 > 0.5 \text{ nm} \qquad (1).$$

For example, in the case where the glass plate for a mobile body is used as a reflection mirror as shown in part (A) of Fig. 9, since the smoothness of the second main surface is made lower than in the conventional configuration by setting $Ra_2$ larger than 5 nm, the ability of the second main surface to hold the adhesive layer can be secured sufficiently during long-term use. As a result, the probability that the glass plate for a mobile body comes off the support member can be lowered and the glass plate for a mobile body can be used in a proper environment. Furthermore, since $Ra_2$ is larger than $Ra_1$ and their difference is larger than 0.5 nm, the first main surface is higher in smoothness than the second main surface. Thus, even in the case where $Ra_2$ is set so as to lower the probability that the glass plate for a mobile body comes off the support member, the resolution of a virtual image, that is, an image that is formed by image forming light can be increased.

For another example, in the case where the glass plate for a mobile body according to the present invention is used as a combiner as shown in part (B) of Fig. 9, since $Ra_2$ is larger than 5 nm, external light is scattered by the second main surface and hence the amount of external light going toward a user side can be reduced. As a result, the reduction of the visibility of an image (virtual image) that is formed by image forming light can be suppressed and the glass plate for a mobile body can be used in a proper environment. Furthermore, since the first main surface is higher in smoothness than the second main surface, the resolution of an image can be increased even in the case where $Ra_2$ is set so as to suppress reduction of the visibility of a virtual image due to external light.

Furthermore, as $Ra_1$ is 5 nm or less, scattering of the image forming light on the first main surface can be suppressed, whereby the resolution of the image can be increased.

From the above, the improved adhesive performance and visibility can be secured, and then the glass plate for the mobile body capable of increasing the resolution of the image is obtained.

In the glass plate for a mobile body according to the aspect, it is preferable that $Ra_2$ is 1,000 nm or smaller. In the case where the glass plate for a mobile body is used as a reflection mirror, formation of a gap between the second main surface and the adhesive layer can be suppressed and the ability to hold the adhesive layer is increased. In the case where the glass plate for a mobile body is used as a combiner, since the second main surface of the glass plate for a mobile body scatters external light to a proper extent, whereby haze can be reduced and the visibility of the outside of the mobile body from a viewer can be increased.

In the glass plate for a mobile body, it is preferable that a reflection layer having an average spectral reflectance of 85% or larger with respect to a light having a wavelength range of 400 nm or larger and 700 nm or smaller is formed on the first main surface or the second main surface.

In the glass plate for a mobile body, it is preferable that the reflection layer is formed on the first main surface.

The glass plate for a mobile body can be used as a reflection mirror. In particular, the resolution of an image can be increased by forming the reflection layer on the first main surface.

In the glass plate for a mobile body , it is preferable that a semi-transparent reflection layer having an average spectral reflectance of 5% or larger and 25% or smaller with respect to a light having a wavelength range of 400 nm or larger and 700 nm or smaller is formed on the first main surface or the second main surface.

In the glass plate for a mobile body , it is preferable that the semi-transparent reflection layer is formed on the first main surface.

The glass plate for a mobile body can be used as a semi-reflection mirror. In particular, the resolution of an image obtained by semi-reflection can be increased by forming the semi-transparent reflection layer on the first main surface.

In the glass plate for a mobile body, it is preferable that the glass plate has an arithmetic mean waviness $Wa_1$ (nm) of the first main surface and an arithmetic mean waviness $Wa_2$ (nm) of the second main surface, in which $Wa_1$ is 10 nm or smaller and $Wa_2$ is larger than 10 nm. Waviness of an image projected onto the glass plate for a mobile body can be suppressed and adhesive performance that is necessary in fixing the glass plate for a mobile body can be maintained.

In the glass plate for a mobile body, it is preferable that $Wa_2$ is 500 nm or smaller. In the case where the glass plate for a mobile body is used as a combiner, external appearance can be improved.

In the glass plate for a mobile body according to the aspect of the present invention, it is preferable that the glass plate has an average height $Rc_1$ (nm) of the first main surface and an average height $Rc_2$ (nm) of the second main surface, in which $Rc_1$ is 10 nm or smaller and $Rc_2$ is larger than 27 nm.

The glass plate for a mobile body can suppress distortion of an image even for the case of a high resolution image. When the glass plate for a mobile body is fixed, the wettability and the adhesive strength of an adhesive can be increased, whereby a residual air that may cause a defect can be reduced.

In the glass plate for a mobile body , it is preferable that the glass plate has an average length $Rsm_1$ (nm) of the first main surface and an average length $Rsm_2$ (nm) of the second main surface, in which $Rsm_1$ is 11 nm or smaller and $Rsm_2$ is larger than 28 nm. The glass plate for a mobile body can retain a texture as glass and can be given antiglareness while being kept low in glossiness and glare degree. Furthermore, adhesive performance that is necessary in fixing the glass plate for a mobile body can be maintained.

In the glass plate for a mobile body, it is preferable that the glass plate for a mobile body is a combiner.

In the glass plate for a mobile body, it is preferable that the glass plate for a mobile body is a reflection mirror.

A display device includes the above-described glass plate for a mobile body and a projector.

In the display device according to the present invention, the display device is a head-up display device in which an image forming light emitted from the projector is reflected by a reflection mirror, projected onto a windshield of the mobile body, and then displayed on an opposite side of the windshield to a user as a virtual image; the glass plate for a mobile body is used as the reflection mirror and reflects the image forming light by the first main surface; and the second main surface is fixed to a support member via an adhesive layer.

In the display device according to the present invention, the display device is alternatively a head-up display device in which an image forming light emitted from the projector is projected onto a combiner and then displayed on an opposite side of the combiner to a user as a virtual image; the glass plate for a mobile body is used as the combiner; the image forming light is projected onto the first main surface; and the glass plate for a mobile body is disposed such that an outside of the mobile body is viewed through the first main surface and the second main surface.

ADVANTAGEOUS EFFECTS OF INVENTION

The present invention can provide a use of a glass plate for a mobile body and a display device that are capable of increasing the resolution of an image formed by image forming light going toward the first main surface.

BRIEF DESCRIPTION OF DRAWINGS

[Fig. 1] Fig. 1 shows a glass plate for a mobile body ; part (A) of Fig. 1 is a perspective view and part (B) of Fig. 1 is a side view.

[Fig. 2] Fig. 2 is an explanatory diagram illustrating a manufacturing method of the glass plate for a mobile body.

[Fig. 3] Fig. 3 is schematic diagrams showing application examples of the glass plates for a mobile body; part (A) of Fig. 3 shows an example of application to a windshield-type HUD device and part (B) of Fig. 3 shows an example of application to a combiner-type HUD device.

[Fig. 4] Fig. 4 is a graph showing a relationship between the shaping evaluation index $\phi$ and $Ra_2$ in Examples of the present invention.

[Fig. 5] Fig. 5 is a graph showing a relationship between the shaping evaluation index $\phi$ and $\Delta Ra$ in the Examples.

[Fig. 6] Fig. 6 is graphs showing relationships between the shaping evaluation index $\phi$ and each of $Wa_1$ and $Wa_2$ in the Examples.

[Fig. 7] Fig. 7 is graphs showing relationships between the shaping evaluation index $\phi$ and each of $Rc_1$ and $Rc_2$ in the Examples.

[Fig. 8] Fig. 8 is graphs showing relationships between the shaping evaluation index $\phi$ and each of $Rsm_1$ and $Rsm_2$ in the Examples.

[Fig. 9] Fig. 9 is schematic diagrams showing application examples of conventional glass plates for a mobile body; part (A) of Fig. 9 shows an example of application to a windshield-type HUD device and part (B) of Fig. 9 shows an example of application to a combiner-type HUD device.

DESCRIPTION OF EMBODIMENTS

The following definitions of terms will be applied to both of this specification body and the claims.

The term "flat portion" means a portion whose average radius of curvature is larger than 1,000 mm.

The term "bent portion" means a portion whose average radius of curvature is 1,000 mm or smaller.

The terms "arithmetic mean roughness Ra," "arithmetic mean waviness Wa" "average height Rc," and "average length Rsm" are values measured according to the Japanese Industrial Standard JIS B0601-2001.

[Structure of glass plate for mobile body]

First, the structure of a glass plate for a mobile body will be described.

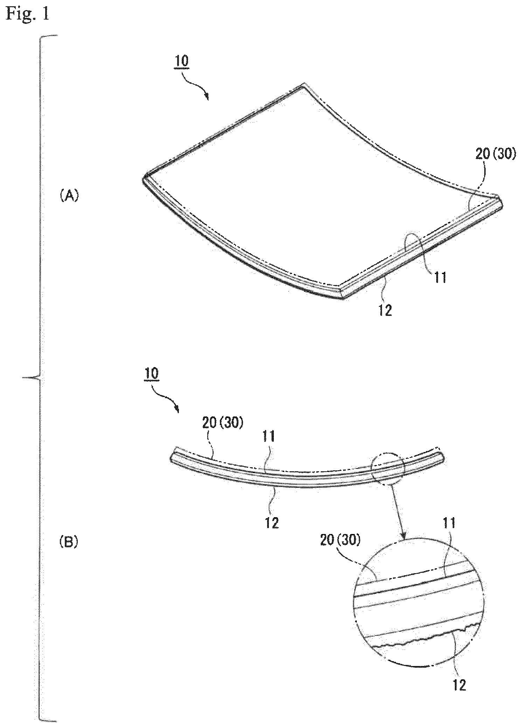

A glass plate for mobile body 10 shown in parts (A) and (B) of Fig. 1 is transparent strengthened glass that is rectangular in a plan view and is installed in a mobile body. The glass plate for mobile body 10 has a first main surface 11 and a second main surface 12. The glass plate for mobile body 10 is formed so as to be recessed with respect to both its ends toward the side of the second main surface 12 at the center of the rectangular shape in its longitudinal direction, like a curved surface shape, and thus constitutes a bent portion as a whole.

The arithmetic mean roughness $Ra_1$ (nm) of the first main surface 11 and the arithmetic mean roughness $Ra_2$ (nm) of the second main surface 12 satisfy the following Relation (1). $Ra_1$ is 5 nm or smaller and $Ra_2$ is larger than 5 nm.

$$Ra_2 - Ra_1 > 0.5 \text{ nm} \qquad (1)$$

That is, as shown in an enlarged part of part (B) of Fig. 1, the smoothness of the first main surface 11 is higher than that of the second main surface 12.

Furthermore, it is preferable that $Ra_2$ is 1,000 nm or smaller.

$Ra_1$ is 5 nm or smaller. This is to project a high resolution image on a glass surface without distortion. $Ra_1$ is preferably 4 nm or smaller, even preferably 3 nm or smaller.

The difference of $Ra_2 - Ra_1$ is preferably less than 995 nm, even preferably less than 200 nm. This is to suppress disorder of a picture projected onto the first main surface and suppress deterioration of appearance due to white turbidity of the second main surface, at the same time.

The arithmetic mean waviness $Wa_1$ (nm) of the first main surface 11 is preferably 10 nm or smaller, even preferably 5 nm or smaller, and further preferably 3 nm or smaller. This makes it possible to suppress large waviness of an image projected onto the glass plate for mobile body 10.

The arithmetic mean waviness $Wa_2$ (nm) of the second main surface 12 is preferably larger than 10 nm, even preferably 15 nm or larger, and further preferably 20 nm or larger. This makes it possible to maintain the adhesive performance of the glass plate for mobile body 10.

$Wa_2$ is preferably 500 nm or smaller, even preferably 250 nm or smaller, and further preferably 100 nm or smaller. This makes it possible to improve the external appearance when, for example, the glass plate for mobile body 10 is used as a combiner.

The average height $Rc_1$ (nm) of the first main surface 11 is preferably 10 nm or smaller, even preferably 7 nm or smaller, and further preferably 6 nm or smaller. This makes it possible to project a high resolution image onto the surface of the glass plate for mobile body 10 without distorting it. It is preferable that $Rc_1$ is 1 nm or larger though there are no particular limitations on its lower limit.

As indicated by a two-dot chain line in parts (A) and (B) of Fig. 1, it is preferable that a reflection layer 20 whose average of spectral reflectance values of light having a wavelength that is 400 nm to 700 nm is 85% or larger is formed on the first main surface 11. Alternatively, it is preferable that a semi-transparent reflection layer 30 whose average of spectral reflectance values in a visible light range (wavelength 400 nm to 700 nm) is 5% or larger and 25% or smaller is formed on the first main surface 11 instead of the reflection layer 20.

A reflection layer 20 or a semi-transparent reflection layer 30 may be formed on the second main surface 12. For example, in the case where the glass plate for mobile body 10 is used as a combiner, a semi-transparent reflection layer 30 may be formed on the second main surface 12 and a function film such as a reflection layer 20 or a heat reflective film may further be formed. This is to prevent excessive temperature increase of the combiner due to sunlight and thereby prevent thermal deformation, and to prevent a failure of a combiner elevation mechanism unit due to excessive temperature increase.

[Manufacturing method of glass plate for mobile body]

Next, an example of a manufacturing method of the glass plate for mobile body 10 will be described.

First, a shaping machine will be described.

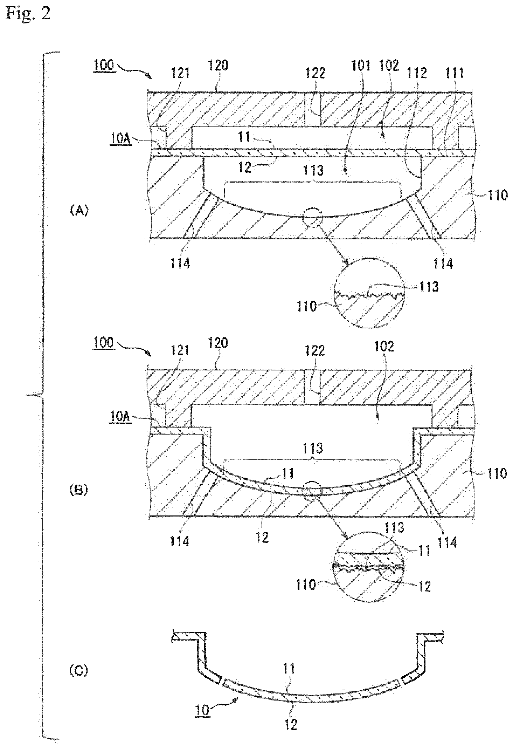

As shown in part (A) of Fig. 2, the shaping machine 100 includes a female mold 110 and a holding member 120 and manufactures a glass plate for mobile body 10 by a vacuum shaping method.

The female mold 110 includes a placement surface 111 on which a glass plate 10A to be shaped is mounted and a recess portion 112 which is recessed against the placement surface 111. The recess portion 112 is formed with a shaping surface 113 to come into contact with the second main surface 12. As shown in an enlarged part of part (A) of Fig. 2, the shaping surface 113 is formed with projections and recesses. Suction holes 114 are formed outside the shaping surface 113 of the recess portion 112. The suction holes 114 are connected to a sucking machine (not shown) that is installed outside the female mold 110.

The holding member 120 includes a contact portion 121 which is to come into contact with the glass plate 10A to be shaped and to hold the glass plate 10A to be shaped between itself and the placement surface 111 of the female mold 110. In a top view, the contact portion 121 is formed so as to surround the recess portion 112. A through-hole 122 is formed through the holding member 120 on the inside of the contact portion 121.

A glass plate for mobile body 10 is manufactured in the following manner using the shaping machine 100.

First, after being heated preliminarily in a heating furnace (not shown) until its equilibrium viscosity becomes higher than or equal to about $10^{12.5}$ Pa·s, as shown in part (A) of Fig. 2, the glass plate 10A to be shaped is mounted on the placement surface 111 of the shaping machine 100. Then the holding member 120 is fixed such that the glass plate 10A to be shaped is sandwiched between the contact portion 121 and the placement surface 111 and the recess portion 112 is closed by the glass plate 10A to be shaped, whereby an airtight space 101 is formed. Softening of the glass plate 10A to be shaped by heating with a heater (not shown) is started around a time of the sandwiching of the glass plate 10A to be shaped between the contact portion 121 and the placement surface 111. At this time, since the through-hole 122 is formed through the holding member 120, the space enclosed by the glass plate 10A to be shaped and the contact portion 121 is an open space 102. The term "softening" means a state that the glass plate 10A to be shaped is heated such that its equilibrium viscosity becomes $10^{7.5}$ to $10^{11}$ Pa·s.

The sucking machine (not shown) is driven in a state that the glass plate 10A to be shaped is soft, whereby the air inside the closed space 101 is sucked out through the suction holes 114. This suction produces a pressure difference between the closed space 101 and the open space 102, whereby the second main surface 12 comes into close contact with the shaping surface 113 as shown in part (B) of Fig. 2, and is shaped so as to conform to the projections and recesses of the shaping surface 113 as shown in an enlarged part of the same figure. The value of $Ra_2$ can be adjusted to be larger than 5 nm and 1,000 nm or smaller using the pressure of the suction through the suction holes 114, the shaping temperature, and the shaping time. On the other hand, since the glass plate 10A to be shaped is shaped with its first main surface 11 kept not in contact with any other object, $Ra_1$ comes to be 5 nm or smaller and to satisfy Relation (1). The radius of curvature and the shape of the bent portion can be adjusted according to the shape of the mold used, the suction pressure, the shaping temperature, and the shaping time. The radius of curvature of the bent portion is 1,000 nm or smaller, and is preferably 800 mm or smaller, even preferably 5 mm or larger and 800 mm or smaller, and further preferably 10 mm or larger and 800 mm or smaller. In the case where a glass plate for a mobile body finally obtained is used as a combiner, a wide angle of view can be secured even in a narrow space by setting the radius of curvature of the bent portion in the above range.

Subsequently, the glass plate 10A to be shaped is removed from the shaping machine 100 after cooling it until its viscosity becomes $10^{17}$ or higher. Then, as shown in part (C) of Fig. 2, the glass plate 10A to be shaped is cut by a cutting means (not shown), whereby a glass plate for mobile body 10 is obtained. There may occur a case that marks of the suction holes 114 are transferred to the glass plate 10A to be shaped during the above vacuum shaping. To obtain a desired glass plate for mobile body 10, it is preferable to take a proper measure such that marks of the suction holes 114 are transferred to positions that are outside the desired glass plate for mobile body 10.

The glass plate for mobile body 10 is then subjected to chamfering treatment and strengthening treatment (described later). A reflection layer 20 or a semi-transparent reflection layer 30 is formed on the first main surface 11 by, for example, evaporation according to a need.

Although the manufacturing method of a glass plate for mobile body 10 that employs the holding member 120 has been described above, the holding member 120 may be omitted.

It is preferable to set the temperature of the open space 102 at 300°C or higher. This is to suppress a phenomenon that the glass is cooled indirectly by heat convection that is caused depending on the temperature of the open space 102, thereby lowering the number of defects formed in the glass surface. The temperature of the open space 102 is preferably 400°C or higher, even preferably 500°C or higher. It is preferable that the temperature of the open space 102 is 900°C or lower. This is to prevent deterioration of the mold and the equipment. It is even preferable that the temperature of the open space 102 is 800°C or lower, and it is further preferable that the temperature of the open space 102 is 700°C or lower.

In the case where a glass plate for mobile body 10 is shaped by the vacuum shaping method, it is preferable that the temperature of gas that is sucked out through the suction holes 114 is 300°C or higher. This is to suppress a phenomenon that the glass is cooled indirectly by convection of gas around the bottom surface of the glass during shaping. The temperature of gas to be sucked out is preferably 400°C or higher, even preferably 500°C or higher. It is preferable that the temperature of gas to be sucked out is 900°C or lower. This is to prevent deterioration of the mold and the equipment. It is even preferable that the temperature of gas to be sucked out is 800°C or lower, and it is further preferable that the temperature of gas to be sucked out is 700°C or lower.

[Application examples of glass plate for mobile body]

It is preferable that the above-described glass plate for a mobile body is provided in a display device that is installed in a mobile body.

It is preferable that the display device is a head-up display device in which an image forming light emitted from the projector is reflected by a reflection mirror, projected onto a windshield of the mobile body, and then displayed on an opposite side of the windshield to a user as a virtual image; the glass plate for a mobile body is used as the reflection mirror and reflects the image forming light by the first main surface; and the second main surface is fixed to a support member via an adhesive layer.

It is preferable that the display device is a head-up display device in which an image forming light emitted from the projector is projected onto a combiner and then displayed on an opposite side of the combiner to a user as a virtual image; the glass plate for a mobile body is used as the combiner; the image forming light is projected onto the first main surface; and the glass plate for a mobile body is disposed such that an outside of the mobile body is viewed through the first main surface and the second main surface.

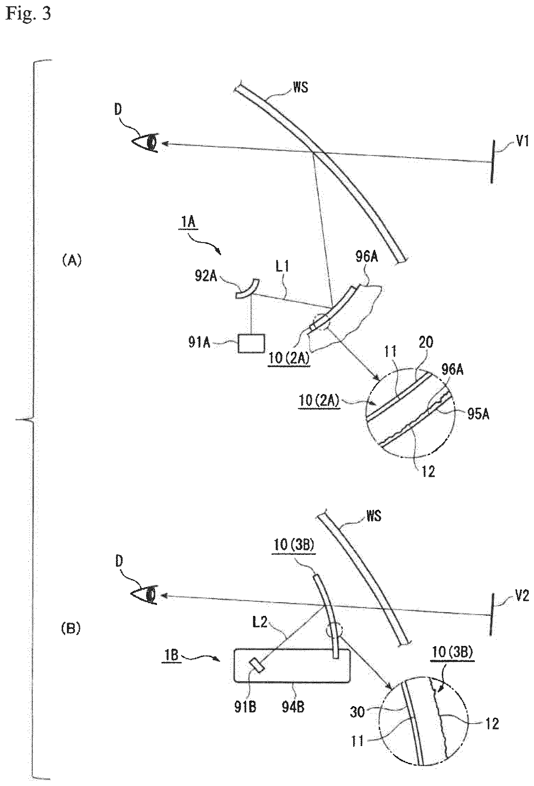

Application example 1 shown in part (A) of Fig. 3 is a windshield-type HUD device 1A in which a glass plate for mobile body 10 having a reflection layer 20 is used as a reflection mirror 2A.

In application example 1, since the smoothness of the second main surface 12 is made low by setting $Ra_2$ larger than 5 nm, in the case where the glass plate for mobile body 10 is fixed to a support member 96A via an adhesive layer 95A, the ability of the second main surface 12 to hold the adhesive layer 95A can be secured sufficiently during long-term use. As a result, the probability that the glass plate for mobile body 10 comes off the support member 96A can be lowered and the glass plate for mobile body 10 can be used in a severe environment where temperature and humidity vary to a large extent as in a mobile body. Furthermore, since the first main surface 11 is higher in smoothness than the second main surface 12, even in the case where $Ra_2$ is set so as to lower the probability that the glass plate for mobile body 10 comes off the support member 96, the resolution of a virtual image V1 that is formed through reflection, by the reflection layer 20, of image forming light L1 going toward the first main surface 11 can be increased.

Application example 2 shown in part (B) of Fig. 3 is a combiner-type HUD device 1B in which a glass plate for mobile body 10 having a semi-transparent reflection layer 30 is used as a combiner 3B.

In application example 2, since external light is scattered by the second main surface 12, the amount of external light going toward a user D side can be reduced. As a result, the reduction of the visibility of a virtual image V2 that is formed through semi-reflection, by the semi-transparent reflection layer 30, of image forming light L2 going toward the first main surface 11 can be suppressed and the glass plate for mobile body 10 can be used in a proper environment. Furthermore, since the first main surface is higher in smoothness than the second main surface, the resolution of the virtual image V2 can be increased even in the case where $Ra_2$ is set so as to suppress reduction of the visibility of the virtual image V2 due to external light.

In particular, since $Ra_1$ is 5 nm or smaller, in each of application examples 1 and 2, the scattering of image forming light L1 or L2 by the first main surface 11 can be suppressed and the resolution of the virtual image V1 or V2 can be increased.

Furthermore, since $Ra_2$ is 1,000 nm or smaller, in application example 1, the formation of a gap between the second main surface 12 and the adhesive layer 95A can be suppressed and the ability to hold the adhesive layer 95A can be increased. In application example 2, since the glass plate for a mobile body scatters external light to a proper extent, haze can be reduced and the visibility of the outside of the mobile body from a viewer can be increased.

In the glass plate for a mobile body according to the present invention, the glass plate for a mobile body may be a cover glass for a vehicular display device.

«Modifications»

Various improvements, design modifications, etc. are possible to be applied without departing from the gist of the present invention. Specific procedures, structures, etc. that are employed in practicing the present invention can be changed to other ones as long as the object of the present invention can be attained.

For example, the glass plate for mobile body 10 can have any of various shapes or be made of any of various materials according to the use.

As for the shape, the glass plate for mobile body 10 may be a plate having both of a flat portion and a bent portion, and may be a plate having surface projections and recesses as long as Relation (1) is satisfied and $Ra_2$ is larger than 5 nm. The shape of the glass plate for mobile body 10 is not limited to a plate; it may be like a film.

As for the material, common kinds of glass, for example, inorganic glass and organic glass such as polycarbonate or acrylic can be used. Other kinds of synthetic resin etc. can also be used.

As for the material, there is no limitation as long as it is transparent; a colored base material may be used as long as necessary functions such as securing of necessary visibility are not impaired.

In the case where the glass plate for mobile body 10 is made of inorganic glass, it is preferable that its thickness is 0.5 mm or lager and 5 mm or smaller. Glass whose thickness is larger than or equal to this lower limit provides an advantage that a glass plate for mobile body 10 can be obtained that has both benefits of high strength and good texture. In the case where inorganic glass is used, it is even preferable that its thickness is 0.7 mm or larger and 3 mm or smaller and it is further preferable that its thickness is 1 mm or larger and 3 mm or smaller. The thickness of the glass plate for mobile body 10 may be either uniform or non-uniform. In the case where the thickness is non-uniform, there are no limitations on the shape; for example, the shape may be trapezoidal, triangular, C-shaped, or S-shaped in a cross section taken parallel with the thickness direction.

From the viewpoint of weathering resistance, it is preferable that the glass plate for mobile body 10 is made of inorganic glass. In the case where inorganic glass is used, even in an environment as in a vehicle in which temperature, humidity, etc. vary to a large extent, the degree of shape change of the glass plate for mobile body 10 is low, so that the distortion of a virtual image formed can be lowered. Furthermore, aging due to long-term use can be suppressed even in such a severe environment.

There are no particular limitations on the glass composition; a specific example of the glass composition is a glass containing, in mole% on an oxide basis, 50% to 80% of $SiO_2$, 0.1% to 25% of $Al_2O_3$, 3% to 30% of $Li_2O + Na_2O + K_2O$, and 0% to 25% of MgO, 0% to 25% of CaO, and 0% to 5% of $ZrO_2$. More specific examples of the glass composition will be listed below. For example, an expression "containing 0% to 25% of MgO" means that MgO is not indispensable and may be contained by up to 25%.

(i) Glass containing, in mole% on an oxide basis, 63% to 73% of $SiO_2$, 0.1% to 5.2% of $Al_2O_3$, 10% to 16% of $Na_2O$, 0% to 1.5% of $K_2O$, 0% to 5% of $Li_2O$, 5% to 13% of MgO, and 4% to 10% of CaO.

(ii) Glass that contains, in mole% on an oxide basis, 50% to 74% of $SiO_2$, 1% to 10% of $Al_2O_3$, 6% to 14% of $Na_2O$, 3% to 11% of $K_2O$, 0% to 5% of $Li_2O$, 2% to 15% of MgO, 0% to 6% of CaO, and 0% to 5% of $ZrO_2$ and in which the total content of $SiO_2$ and $Al_2O_3$ is 75% or smaller, the total content of $Na_2O$ and $K_2O$ is 12% to 25%, and the total content of MgO and CaO is 7% to 15%.

(iii) Glass containing, in mole% on an oxide basis, 68% to 80% of $SiO_2$, 4% to 10% of $Al_2O_3$, 5% to 15% of $Na_2O$, 0% to 1% of $K_2O$, 0% to 5% of $Li_2O$, 4% to 15% of MgO, and 0% to 1% of $ZrO_2$.

(iv) Glass that contains, in mole% on an oxide basis, 67% to 75% of $SiO_2$, 0% to 4% of $Al_2O_3$, 7% to 15% of $Na_2O$, 1% to 9% of $K_2O$, 0% to 5% of $Li_2O$, 6% to 14% of MgO, 0% to 1.5% of $ZrO_2$ and in which the total content of $SiO_2$ and $Al_2O_3$ is 71% to 75%, the total content of $Na_2O$ and $K_2O$ is 12% to 20%, and the content of CaO is smaller than 1% if it is contained.

(v) Glass containing, in mole% on an oxide basis, 50% to 80% of $SiO_2$, 2% to 25% of $Al_2O_3$, 0% to 10% of $Li_2O$, 0% to 18% of $Na_2O$, 0% to 10% of $K_2O$, 0% to 15% of MgO, 0% to 5% of CaO, and 0% to 5% of $ZrO_2$.

(vi) Glass that contains, in mole% on an oxide basis, 50% to 74% of $SiO_2$, 1% to 10% of $Al_2O_3$, 6% to 14% of $Na_2O$, 3% to 11% of $K_2O$, 2% to 15% of MgO, 0% to 6% of CaO, and 0% to 5% of $ZrO_2$ and in which the total content of $SiO_2$ and $Al_2O_3$ is 75% or smaller, the total content of $Na_2O$ and $K_2O$ is 12% to 25%, and the total content of MgO and CaO is 7% to 15%.

(vii) Glass that contains, in mole% on an oxide basis, 68% to 80% of $SiO_2$, 4% to 10% of $Al_2O_3$, 5% to 15% of $Na_2O$, 0% to 1% of $K_2O$, 4% to 15% of MgO, 0% to 1% of $ZrO_2$ and in which the total content of $SiO_2$ and $Al_2O_3$ is 80% or smaller.

(viii) Glass that contains, in mole% on an oxide basis, 67% to 75% of $SiO_2$, 0% to 4% of $Al_2O_3$, 7% to 15% of $Na_2O$, 1% to 9% of $K_2O$, 6% to 14% of MgO, 0% to 1% of CaO, and 0% to 1.5% of $ZrO_2$ and in which the total content of $SiO_2$ and $Al_2O_3$ is 71% to 75% and the total content of $Na_2O$ and $K_2O$ is 12% to 20%.

(ix) Glass containing, in mole% on an oxide basis, 60% to 75% of $SiO_2$, 0.5% to 8% of $Al_2O_3$, 10% to 18% of $Na_2O$, 0% to 5% of $K_2O$, 6% to 15% of MgO, and 0% to 8% of CaO.

(x) Glass that contains, in mass% on an oxide basis, 63% to 75% of $SiO_2$, 3% to 12% of $Al_2O_3$, 3% to 10% of MgO, 0.5% to 10% of CaO, 0% to 3% of SrO, 0% to 3% of BaO, 10% to 18% of $Na_2O$, 0% to 8% of $K_2O$, 0% to 3% of $ZrO_2$, and 0.005% to 0.25% of $Fe_2O_3$ and in which $R_2O/Al_2O_3$ (in this formula, $R_2O$ is $Na_2O + K_2O$) is 2.0 or larger and 4.6 or smaller.

(xi) Glass that contains, in mass% on an oxide basis, 66% to 75% of $SiO_2$, 0% to 3% of $Al_2O_3$, 1% to 9% of MgO, 1% to 12% of CaO, 10% to 16% of $Na_2O$, and 0% to 5% of $K_2O$.

Furthermore, in the case where a colored glass is to be used, a colorant may be added within the range that does not impair attaining of a desired chemical strengthening property. For example, metal oxides of Co, Mn, Fe, Ni, Cu, Cr, V, Bi, Se, Ti, Ce, Er, and Nd, that is, $Co_3O_4$, MnO, $MnO_2$, $Fe_2O_3$, NiO, CuO, $Cu_2O$, $Cr_2O_3$, $V_2O_5$, $Bi_2O_3$, $SeO_2$, $TiO_2$, $CeO_2$, $Er_2O_3$, $Nd_2O_3$, etc. each of which has an absorption in the visible range may be added.

In the case where colored glass is used as glass, the glass may contain, in mole percentage on an oxide basis, 7 % or less of colorant components (at least one component selected from the group consisting of metal oxides of Co, Mn, Fe, Ni, Cu, Cr, V, Bi, Se, Ti, Ce, Er, and Nd). If the content of colorant components is larger than 7%, devitrification is prone to occur for the glass. The content thereof is preferably 5% or smaller, even preferably 3% or smaller, and further preferably 1% or smaller. The glass base material may contain, as appropriate, $SO_3$, a chloride, a fluoride, or the like as a refining agent during melting.

In the case where organic glass, a synthetic resin, or the like is used as a material of the glass plate for mobile body 10, base materials may be laid on each other to configure the glass plate for mobile body 10 irrespective of whether the base materials are of the same kind or different kinds, and any of various kinds of adhesive layers may be inserted between the base materials.

In the case where inorganic glass is used as a material of the glass plate for mobile body 10, it may be subjected to either of a chemical strengthening treatment and physical strengthening treatment, and need not be subjected to either of them. It is preferred that the chemical strengthening treatment is performed. In the case where relatively thin inorganic glass as described above is to be subjected to strengthening treatment, it is appropriate to employ chemical strengthening treatment because it can give desired strength easily.

[Chemical strengthening treatment]

Chemical strengthening treatment is a treatment of forming a surface layer having compressive stress by performing ion exchange treatment on the surface of a glass. More specifically, ion exchange treatment is performed at a temperature that is lower than or equal to a glass transition temperature of a glass for chemical strengthening, whereby metal ions (typically, Li ions or Na ions) that exist near the surface of the glass plate and have a small ion radius are replaced by ions (typically, Na ions or K ions for Li ions, and K ions for Na ions) having a larger ion radius.

Chemically strengthened glass can be manufactured by performing chemical strengthening treatment on glass for chemical strengthening. A manufacturing method described below is directed to a case of manufacturing a plate-like chemically strengthened glass.

First, a glass raw material is prepared and heat-melted in a glass melting furnace. The glass is then uniformized by bubbling, stirring, addition of a refining agent, etc., shaped into a glass plate having a prescribed thickness by a known shaping method, and cooled gradually. Alternatively, the glass may be shaped into a plate-like shape by a method that the glass is shaped into a block-like shape, cooled gradually, and then cut.

Example methods for shaping into a plate-like shape include a float process, a pressing process, a fusion process, and a down drawing process. In particular, the float process is preferable for manufacture of a large glass plate. Continuous shaping processes other than the float process, such as the fusion process and the down drawing process, are also preferable.

The shaped glass plate is then cut into a prescribed size and chamfered. It is preferable to perform chamfering such that the size of each chamfered portion measures 0.05 mm or larger and 0.5 mm or smaller in a plan view. To prevent a "prism effect" that rainbow colors appear as a result of dispersion of incident external light, the arithmetic mean surface roughness Ra of the end surfaces of the glass plate for a mobile body is preferably 100 nm or larger, even preferably 200 nm or larger.

Subsequently, the glass plate is subjected to chemical strengthening by performing ion exchange treatment thereon once or two or more times (in one stage or two or more stages), whereby a compressive stress layer and a tensile stress layer are formed.

In the chemical strengthening process, glass to be subjected to the treatment is brought into contact with a molten salt (e.g., potassium salt or sodium salt) containing alkali metal ions that are larger in ion radius than alkali metal ions (e.g., Na ions or Li ions) contained in the glass under a temperature range that does not exceed a glass transition temperature.

Ion exchange is performed between alkali metal ions contained in the glass and alkali metal ions contained in the molten salt and being larger in ion radius, whereby compressive stress is generated in the glass surface owing to a difference in occupation area between the alkali metal ions and a compressive stress layer is formed. The temperature range in which the glass is brought into contact with the molten salt may be a temperature range that does not exceed the glass transition temperature; however, it is preferable that the temperature range is lower than the glass transition temperature by 50°C or more. This prevents stress relaxation in the glass.

In the chemical strengthening process, the processing conditions of temperature and time under which the glass is brought into contact with the molten salt containing alkali metal ions can be adjusted as appropriate according to the compositions of the glass and the molten salt. It is usually preferable that the molten salt heating temperature is 350°C or higher, and it is even preferable that the molten salt heating temperature is 370°C or higher. It is usually preferable that the molten salt heating temperature is 500°C or lower, and it is even preferable that the molten salt heating temperature is 450°C or lower.

A problem that chemical strengthening is made less likely to occur due to lowering of the ion exchange rate is prevented by setting the molten salt heating temperature at 350°C or higher. Decomposition and deterioration of the molten salt can be suppressed by setting the molten salt heating temperature at 500°C or lower.

To impart a sufficient compressive stress to the glass, the processing time per each processing during which the glass is brought into contact with the molten salt is preferably 10 minutes or longer, even preferably 15 minutes or longer. Long-time ion exchange lowers productivity and causes decrease of the compressive stress value due to relaxation. Thus, it is usually preferable that the processing time per each processing is 20 hours or shorter, and it is even preferable that the processing time is 16 hours or shorter.

Although once or twice of chemical strengthening was exemplified above as an example of the number of times of chemical strengthening, there are no particular limitations on the number of times of chemical strengthening as long as a resulting compressive stress layer and tensile stress layer are given desired properties (DOL, CS, and CT); strengthening may be performed three or more times. A heat treatment process may be performed between two strengthening processes. In the following description, three-time chemical strengthening and chemical strengthening in which a heat treatment process is performed between two strengthening processes will be referred to as three-stage strengthening.

In the case of the three-stage strengthening, chemically strengthened glass can be manufactured by, for example, strengthening processing method 1 or strengthening processing method 2 described below.

(Strengthening processing method 1)

In strengthening processing method 1, first, ion exchange is performed between Na ions in the metal salt and Li ions in the glass by bringing the glass for chemical strengthening containing $Li_2O$ into contact with a metal salt (first metal salt) containing sodium (Na) ions. In the following, this ion exchange process may be referred to as a "first-stage process."

In the first-stage process, for example, glass for chemical strengthening is immersed in a metal salt (e.g., sodium nitrate) containing Na ions at about 350°C to 500°C for about 0.1 to 24 hours. To increase productivity, the first-stage processing time is preferably 12 hours or shorter, even preferably 6 hours or shorter.

As a result of the first-stage process, a deep compressive stress layer is formed in the glass surface and a stress profile can be formed in which the compressive stress value CS is 200 MPa or larger and the depth of the compressive stress, i.e., DOL, is 1/8 of the plate thickness or larger. At the stage of completion of the first-stage process, the glass is high in friability because of large internal tensile stress CT. However, since the friability is lowered in the following processes, the internal tensile stress CT being large at this stage is rather preferable. The internal tensile stress CT at the stage of completion of the first-stage process is preferably 90 MPa or larger, even preferably 100 MPa or larger, and further preferably 110 MPa or larger. This is because the CS of the compressive stress layer is made large.

The first metal salt is an alkali metal salt that contains Na ions most as alkali metal ions. The alkali metal salt may also contain Li ions; however, the content of Li ions is preferably 2% or smaller with respect to 100 mole% of alkali ions, even preferably 1% or smaller, and further preferably 0.2% or smaller. The alkali metal salt may also contain K ions; the content of K ions is preferably 20% or smaller with respect to 100 mole% of alkali ions contained in the first metal salt, even preferably 5% or smaller.

Subsequently, the glass that has been subjected to the first-stage process is brought into contact with a metal salt (second metal salt) containing lithium (Li) ions, whereby the compressive stress value of a layer in the vicinity of the surface is decreased through ion exchange between Li ions in the metal salt and Na ions in the glass. This process may be referred to as a "second-stage process."

More specifically, for example, the glass that has been subjected to the first-stage process is immersed in a metal salt (e.g., a mixed salt of sodium nitrate and lithium nitrate) containing Na and Li at about 350°C to 500°C for about 0.1 to 24 hours. To increase productivity, the second-stage processing time is preferably 12 hours or shorter, even preferably 6 hours or shorter.

The glass that has been subjected to the second-stage process is small in internal tensile stress and hence does not break violently.

The second metal salt is an alkali metal salt, and it is preferable that the alkali metal salt contains Na ions and Li ions as alkali metal ions. A nitrate salt is preferable. The total mole of Na ions and Li ions is preferably 50% or larger with respect to 100 mole% of alkali metal ions contained in the second metal salt, even preferably 70% or larger, and further preferably 80% or larger. The stress profile in a range of DOL/4 to DOL/2 can be controlled by adjusting the Na/Li mole ratio.

The optimum value of the Na/Li mole ratio of the second metal salt varies depending on the glass composition; the Na/Li mole ratio is preferably 0.3 or larger, even preferably 0.5 or larger, and further preferably 1 or larger. To increase the compressive stress value of the compressive stress layer while decreasing CT, the Na/Li mole ratio is preferably 100 or smaller, even preferably 60 or smaller, and further preferably 40 or smaller.

In the case where the second metal salt is a sodium nitrate-lithium nitrate mixed salt, the mass ratio between sodium nitrate and lithium nitrate is, for example, preferably 25:75 to 99:1, even preferably 50:50 to 98:2, and further preferably 70:30 to 97:3.

Subsequently, the glass that has been subjected to the second-stage process is brought into contact with a metal salt (third metal salt) containing potassium (K) ions, whereby large compressive stress is generated at the glass surface through ion exchange between K ions in the metal salt and Na ions in the glass. This ion exchange process may be referred to as a "third-stage process."

More specifically, for example, the glass that has been subjected to the second-stage process is immersed in a metal salt (e.g., potassium nitrate) containing K ions at about 350°C to 500°C for about 0.1 to 10 hours. By this process, a large compressive stress can be generated in a glass surface layer of about 0 to 10 $\mu$m in depth.

In the third-stage process, the compressive stress is increased only in a shallow portion in the glass surface and the inside receives almost no influence. Thus, a surface layer having large compressive stress can be generated while the tensile stress in the inside is kept.

The third metal salt is an alkali metal salt and may contain Li ions as alkali metal ions. The content of Li ions is preferably 2% or smaller with respect to the total number of alkali metal atoms as 100%, even preferably 1% or smaller, and further preferably 0.2% or smaller. The content of Na ions is preferably 2% or smaller, even preferably 1% or smaller, and further preferably 0.2% or smaller.

Since the total processing time of the first-stage to third-stage processes can be made 24 hours or shorter, strengthening processing method 1 is high in productivity and preferable. It is even preferable that the total processing time is 15 hours or shorter, and it is further preferable that the total processing time is 10 hours or shorter.

(Strengthening processing method 2)

In strengthening processing method 2, first, a first-stage process in which ion exchange is performed between Na ions in the metal salt and Li ions in the glass by bringing the glass for chemical strengthening containing $Li_2O$ into contact with a first metal salt containing sodium (Na) ions, is performed.

Since the first-stage process is the same as in strengthening processing method 1 and hence will not be described further.

The glass that has been subjected to the first-stage process is then subjected to heat treatment without bringing it into contact with a metal salt. This process is referred to as a second-stage process.

For example, the second-stage process is performed by keeping the temperature of the glass that has been subjected to the first-stage process at 350°C or higher in the air for a prescribed time. The temperature to be kept is a temperature that is lower than or equal to a strain point of the glass for chemical strengthening. The temperature to be kept is preferably lower than or equal to a temperature that is higher than the processing temperature of the first-stage process by 10°C, and even preferably equal to the processing temperature of the first-stage process.

It is considered that this process decreases CT through thermal diffusion of the alkali ions that were introduced into the glass surface in the first-stage process.

Subsequently, the glass that has been subjected to the second-stage process is brought into contact with a third metal salt containing potassium (K) ions, whereby large compressive stress is generated at the glass surface through ion exchange between K ions in the metal salt and Na ions in the glass. This ion exchange process may be referred to as a "third-stage process."

Since the third-stage process is the same as in strengthening processing method 1 and hence will not be described further.

Since the total processing time of the first-stage to third-stage processes can be made 24 hours or shorter, strengthening processing method 2 is high in productivity, and is therefore preferable. It is even preferable that the total processing time is 15 hours or shorter, and it is further preferable that the total processing time is 10 hours or shorter.

Strengthening processing method 1 can control the stress profile precisely through adjustment of the composition of the second metal salt used in the second-stage process and the processing temperatures.

Strengthening processing method 2 can produce a chemically strengthened glass having superior characteristics at a low cost by a relatively simple process.

As for the processing conditions of the chemical strengthening process, the time, temperature, etc. may be selected properly taking into consideration the characteristics and composition of glass, kinds of molten salts, and other factors.

A chemically strengthened glass is manufactured according to the above procedure.

It is preferable that at least one of the first main surface 11 and the second main surface 12 of the glass plate for mobile body 10 is subjected to antiglare treatment (AG treatment), anti-reflection treatment (AR treatment), anti-fingerprint treatment (AFP treatment), etc. A printed layer may be formed on a part of at least one of the first main surface 11 and the second main surface 12. Furthermore, a protective layer may be formed on the reflection layer 20 or the semi-transparent reflection layer 30. With this measure, deterioration of the reflection layer 20 or the semi-transparent reflection layer 30 due to rubbing can be suppressed. An $SiO_2$ film, a resin hard coat film, or the like can be used as the protective layer.

In the case where the glass plate for mobile body 10 is a glass plate manufactured by the float process, the first main surface 11 may be either a surface (hereinafter referred to as a "top surface") that was not in contact with the tin surface of a float bath during manufacture of the glass substrate, or a surface (hereinafter referred to as a "bottom surface") that was in contact with the tin surface. A glass plate may be used at least one of whose top surface and bottom surface is polished.

There are no particular limitations on the method for shaping the glass plate for mobile body 10; examples other than the above vacuum shaping method include a self-weight shaping method and a press shaping method.

The self-weight shaping method is a method that a glass plate is set on a prescribed mold that conforms to the shape of a glass plate for mobile body 10 after being shaped, and the glass plate is shaped into a prescribed shape by softening the glass plate and bending it by gravity such that it fits with the mold.

The press shaping method is a method that a glass plate is set between prescribed molds (top mold and bottom mold) that conform to the shape of a glass plate for mobile body 10 after being shaped, and the glass plate is shaped into a prescribed shape by bending it such that it fits with the molds by applying a pressing load between the top and bottom molds in a state that the glass plate is softened. In this press shaping method, the first main surface 11 comes into contact with the shaping surface of a mold. The shape of the shaping surface, pressing pressure, shaping temperature, and shaping time are adjusted such that $Ra_1$ and $Ra_2$ satisfy Relation (1), $Ra_1$ becomes 5 nm or smaller, and $Ra_2$ becomes larger than 5 nm and 1,000 nm or smaller.

Laminated glass may be formed by adhering another glass plate to the second main surface 12 of the glass plate for mobile body 10 via an intermediate film.

There are no particular limitations on the use of the glass plate for mobile body 10. According to the present invention the use includes a head-up display (HUD) in which the glass plate may be used as a combiner or a reflection mirror, a windshield, a dashboard (cluster, CID), or a cover glass for a vehicular display device. Further examples of the use include a cover glass for a camera, a cover glass for a radar, a cover glass for a sensor, a decorative member (tile, shift knob, or key), etc. Furthermore, the glass plate for mobile body 10 can be used in a projector; it can be used suitably as a concave mirror or a convex mirror used in a short focal length projector. It is preferable that the glass plate for mobile body 10 is used in a head-up display among the above examples because it is superior in terms of dimensional stability with respect to a temperature variation, long-term durability, image clearness, etc.

Example mobile bodies in which the glass plate for mobile body 10 is to be installed include an automobile, a motorcycle, a bicycle, an airplane, a ship, and a construction machine.

Display devices using the glass plate for mobile body 10 include not only a HUD for projecting a picture onto the glass plate for mobile body 10 using a projector but also, for example, a display in which the glass plate for mobile body 10 is combined with a liquid crystal panel or the like.

EXAMPLES

Examples 3 and 6-8 are Working Examples and Examples 1, 2, 4, and 5 are Comparative Examples.

«Investigation into relationships between shaping evaluation index $\phi$ and $Ra_2$ and $\Delta Ra$ (= $Ra_2$ - $Ra_1$)»

[Shaping evaluation index $\phi$]

As disclosed in JP-A-2004-131347 and JP-A-2005-170766 of the applications of the present applicant, the shaping evaluation index $\phi$ is a dimensionless index that involves three parameters, that is, viscosity, pressure, and operation time relating to shaping of a glass plate and is given by the following Equation (2):

[Math. 1]

$$\Phi = \int_0^t \frac{P(\tau)}{\eta(T)} d\tau \quad \cdots \quad (2)$$

In Equation (2), $P(\tau)$ is the difference (unit: Pa) between the surface pressure acting on the main surface (first main surface) of a glass plate at time $\tau$ and the surface pressure acting on its back surface (second main surface) at time $\tau$, t is the shaping time (unit: s), $\eta(T)$ is the viscosity (unit: Pa·s) of the glass plate at temperature T, and T is the shaping temperature (unit: °C) at time $\tau$.

The shaping evaluation index $\phi$ means that it is expected that the same shape could be obtained by shaping even under sets of shaping conditions that are different from each other in at least one of the above three parameters, if the shaping evaluation index $\phi$ is the same. A larger value of the shaping evaluation index $\phi$ means that glass is pressed against a mold more strongly during shaping. Use of the shaping evaluation index $\phi$ makes it possible to set shaping conditions as appropriate.

[Example 1]

A shaping machine like the one shown in part (A) of Fig. 2 was prepared. The shaping surface of a female mold to come into contact with the second main surface had an arithmetic mean roughness of 730 nm.

As shown in part (A) of Fig. 2, a glass plate having a thickness of 2 mm (AS glass manufactured by AGC Inc.) was set in the shaping machine in such a manner that the second main surface (bottom surface) was in contact with the shaping surface. After the shaping conditions were set to prescribed conditions, a glass plate for a mobile body was manufactured. At this time, the shaping evaluation index $\phi$ was $3.54 \times 10^{-7}$.

[Examples 2-8]

In Example 2, a glass plate for a mobile body was manufactured under the same conditions as in Example 1 except that the shaping evaluation index $\phi$ was $1.23 \times 10^{-4}$.

In Example 3, a glass plate for a mobile body was manufactured under the same conditions as in Example 1 except that the shaping evaluation index $\phi$ was $1.82 \times 10^{-2}$.

In Examples 4, 5, and 6, glass plates for a mobile body were manufactured under the same conditions as in Examples 1, 2, and 3, respectively, except that glass plates each having a thickness of 1.1 mm were used.

In Examples 7 and 8, glass plates for a mobile body were manufactured under the same conditions as in Examples 2 and 3, respectively, except that glass plates each having a thickness of 0.56 mm were used.

[Evaluations]

One glass plate for a mobile body was manufactured for each of Examples 1-8 and $Ra_1$, $Wa_1$, $Rc_1$, and $Rsm_1$ were measured at two points of the first main surface (i.e., the surface that was not in contact with the shaping surface) of each glass plate for a mobile body and average values thereof were calculated. And $Ra_2$, $Wa_2$, $Rc_2$, and $Rsm_2$ were measured at two points of the second main surface (i.e., the surface that was in contact with the shaping surface) and average values thereof were calculated. Furthermore, a value of $\Delta Ra$ was calculated by subtracting the average value of $Ra_1$ from the average value of $Ra_2$. Results are shown in Table 1.

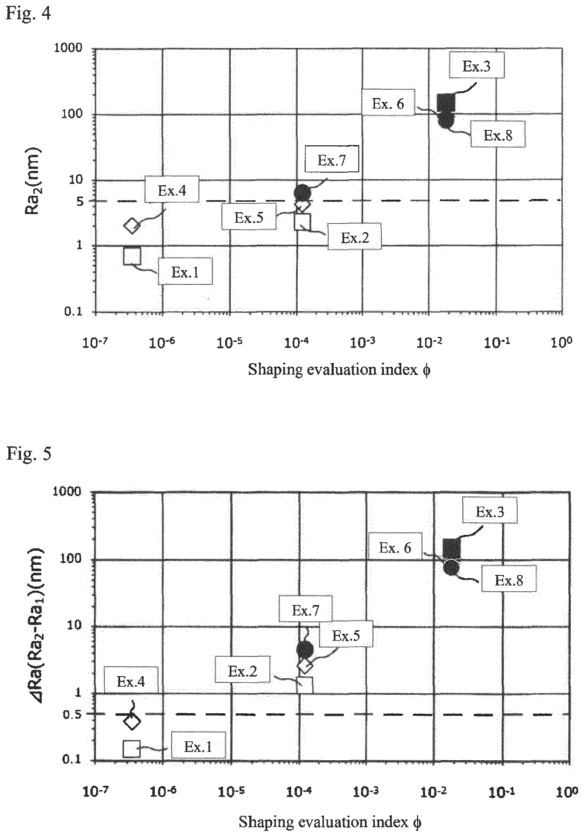

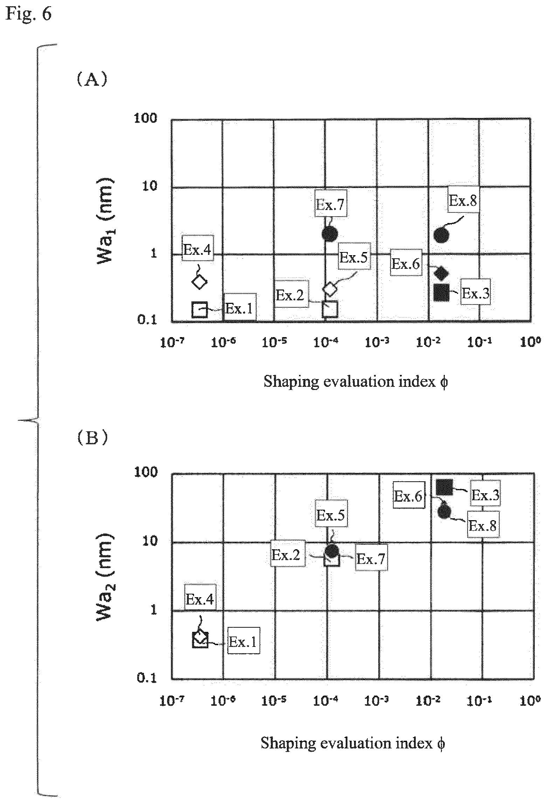

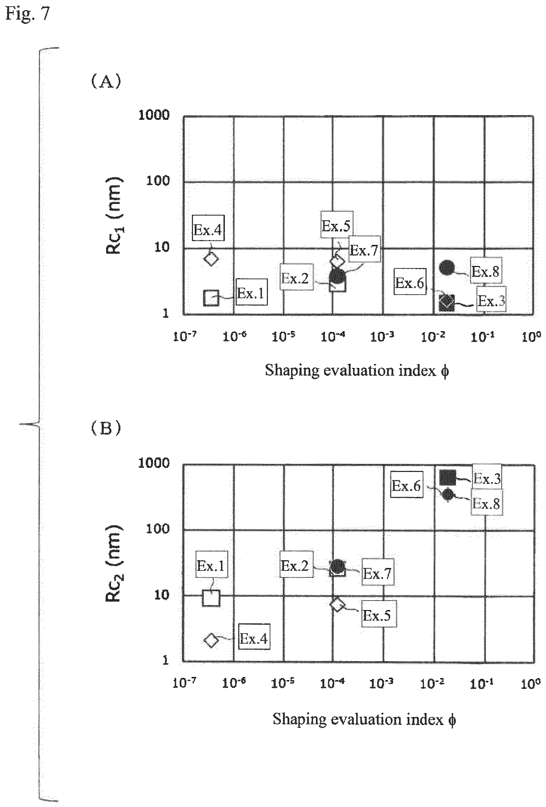

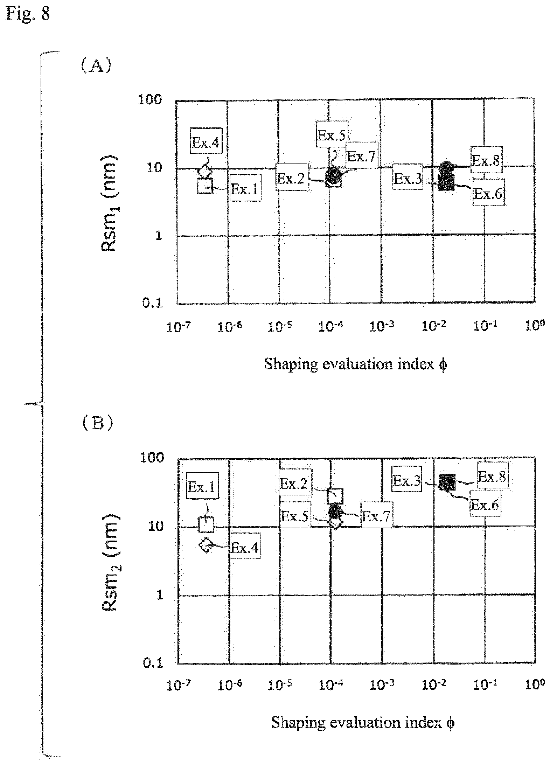

A relationship between the shaping evaluation index $\phi$ and the average value of $Ra_2$ is shown in Fig. 4, a relationship between the shaping evaluation index $\phi$ and $\Delta Ra$ is shown in Fig. 5, relationships between the shaping evaluation index $\phi$ and the average values of Wa are shown in Fig. 6, relationships between the shaping evaluation index $\phi$ and the average values of Rc are shown in Fig. 7, and relationships between the shaping evaluation index $\phi$ and the average values of Rsm are shown in Fig. 8.

Table 1

| | Shaping evaluation index $\phi$ | Thickness (mm) | $Ra_1$ (nm) | $Ra_2$ (nm) | $\Delta Ra$ ($Ra_2 - Ra_1$) (nm) | $Wa_1$ (nm) | $Wa_2$ (nm) | $Rc_1$ (nm) | $Rc_2$ (nm) | $Rsm_1$ (nm) | $Rsm_2$ (nm) |
|---|---|---|---|---|---|---|---|---|---|---|---|
| Ex. 1 | $3.54 \times 10^{-7}$ | | 0.54 | 0.69 | 0.15 | 0.15 | 0.38 | 1.77 | 9.16 | 5.57 | 10.91 |
| Ex. 2 | $1.23 \times 10^{-4}$ | 2.0 | 0.94 | 2.28 | 1.34 | 0.15 | 5.79 | 2.86 | 26.09 | 6.76 | 27.96 |
| Ex. 3 | $1.82 \times 10^{-2}$ | | 1.13 | 147.49 | 146.36 | 0.27 | 62.81 | 1.48 | 639.49 | 5.94 | 44.20 |
| Ex. 4 | $3.54 \times 10^{-7}$ | | 1.64 | 2.03 | 0.39 | 0.38 | 0.43 | 6.92 | 2.08 | 8.99 | 5.51 |
| Ex. 5 | $1.23 \times 10^{-4}$ | 1.1 | 1.67 | 4.28 | 2.61 | 0.30 | 8.22 | 6.33 | 7.41 | 8.35 | 11.77 |
| Ex. 6 | $1.82 \times 10^{-2}$ | | 2.01 | 89.62 | 87.61 | 0.50 | 30.64 | 1.64 | 352.36 | 6.34 | 39.83 |
| Ex. 7 | $1.23 \times 10^{-4}$ | 0.56 | 1.80 | 6.33 | 4.53 | 2.00 | 7.52 | 3.81 | 28.48 | 7.39 | 16.55 |
| Ex. 8 | $1.82 \times 10^{-2}$ | | 2.35 | 78.89 | 76.54 | 1.89 | 28.16 | 5.11 | 355.89 | 9.36 | 44.15 |

As seen from Table 1 and Fig. 4, it was confirmed that $Ra_2$ becomes larger as the shaping evaluation index $\phi$ increases irrespective of the thickness of the glass plate for a mobile body. In particular, when the shaping evaluation index $\phi$ was $1.82 \times 10^{-2}$, $Ra_2$ was larger than 5 nm for all of the three kinds of thickness values (Examples 3, 6, and 8). On the other hand, when the shaping evaluation index $\phi$ was $3.54 \times 10^{-7}$, $Ra_2$ was 5 nm or smaller for both kinds of thickness values (Examples 1 and 4). When the shaping evaluation index $\phi$ was $1.23 \times 10^{-4}$, $Ra_2$ was larger than 5 nm when the thickness was 0.56 mm (Example 7) whereas $Ra_2$ was 5 nm or smaller when the thickness was 2.0 mm (Example 2) and 1.1 mm (Example 5).

As seen from Table 1 and Fig. 5, it was found that $\Delta Ra$ was larger than 0.5 nm and satisfied Relation (1) in Examples 2, 3, and 5-8 and $\Delta Ra$ was 0.5 nm or smaller and did not satisfy Relation (1) in Examples 1 and 4.

In Examples 1-8, wettability was checked using glycerin as an evaluation liquid. Glycerin was dropped onto the second main surface in each of Examples 1-8 and wettability was judged on the basis of a resulting contact angle. A contact angle was measured using a portable contact angle meter (PCA-1 produced by Kyowa Interface Science, Inc.) with a glycerin drop amount of 2 to 3 $\mu$L. A measurement was performed eight times and the average of resulting measurement values is shown in Table 2. Measurement was performed at flat positions selected from the second main surface that was brought into contact with the shaping surface of the female mold used for the shaping.

Table 2

|  | Shaping evaluation index $\phi$ | $Ra_2$ (nm) | Contact angle (°) on second main surface |
|---|---|---|---|
| Ex. 1 | $3.54 \times 10^{-7}$ | 0.69 | 33.3 |
| Ex. 2 | $1.23 \times 10^{4}$ | 2.28 | 27.0 |
| Ex. 3 | $1.82 \times 10^{-2}$ | 147.49 | 19.2 |
| Ex. 4 | $3.54 \times 10^{-7}$ | 2.03 | 27.5 |
| Ex. 5 | $1.23 \times 10^{-4}$ | 4.28 | 22.9 |
| Ex. 6 | $1.82 \times 10^{-2}$ | 89.62 | 22.8 |
| Ex. 7 | $1.23 \times 10^{-4}$ | 6.33 | 21.2 |
| Ex. 8 | $1.82 \times 10^{-2}$ | 78.89 | 19.1 |

In Examples 1, 2, and 4, the glycerin contact angle on the second main surface was large. On the other hand, in Examples 3 and 5-8, the glycerin contact angle on the second main surface was small and the wettability of the second main surface was good. It is therefore expected that when an adhesive that is high in viscosity like glycerin is applied, high application property is obtained and the glass plate can be fixed to a support member of a final product reliably.

A semi-transparent reflection layer was formed by vapor-depositing a thin silver film on the first main surface and a test was conducted in which light was made to pass through the glass plate from the side of its second main surface. When $Ra_2$ was larger than 5 nm, light was scattered to a proper extent and did not lower the visibility of a viewer. On the other hand, when $Ra_2$ was 5 nm or smaller, light that passed through the glass plate from the side of its second main surface directly reached the eyes of a viewer and lowered the visibility.

When an image was projected onto the glass plate for a mobile body on whose first main surface the semi-transparent reflection layer was formed by vapor-depositing a thin silver film, in Examples 3 and 6-8, an image was viewed clearly without becoming a double image because the surface roughness $Ra_1$ of the first main surface was 5 nm or smaller and the surface roughness $Ra_2$ of the second main surface was larger than 5 nm.

Examples 3, 6, and 8 were free of waviness in a virtual image and had no distortion in appearance. This is considered because of the facts that as shown in Table 1 and Fig. 6, $Wa_1$ was 10 nm or smaller and $Wa_2$ was larger than 10 nm.

Examples 3 and 6-8 were free of waviness in a virtual image and is expected to exhibit good adhesive performance because dropped glycerin is not prone to take air into itself. This is considered because of the facts that as shown in Table 1 and Fig. 7, $Rc_1$ was 10 nm or smaller and $Rc_2$ was larger than 27 nm.

In Examples 3, 6, and 8, the glass plate had such optical characteristics as superior glare property and antiglareness while retaining superior glass texture. This is considered because of the facts that as shown in Table 1 and Fig. 8, $Rsm_1$ was 11 nm or smaller and $Rsm_2$ was larger than 28 nm.

As is understood from the above description, a glass plate can be obtained that provides both advantages of improved adhesive performance of the adhered surface and improved optical quality of the non-adhered surface by controlling the conditions such that the first main surface is kept small in roughness and the second main surface is made rough to make $Ra_2$ become larger than 5 nm and make $\Delta Ra$ exceed 0.5 nm.

Although the present invention has been described in detail by referring to the particular embodiment, it is apparent for those skilled in the art that various changes and modifications are possible to be applied without departing from the scope of the invention.

DESCRIPTION OF SYMBOLS

| | |
|---|---|
| 1A, 1B | HUD device |
| 2A | Reflection mirror |
| 3B | Combiner |
| 10 | Glass plate for mobile body |
| 11 | First main surface |
| 12 | Second main surface |
| 20 | Reflection layer |
| 91A, 91B | Projector |
| 95A | Adhesive layer |
| 96A | Support member |
| D | User |
| L1, L2 | Image forming light |
| V1, V2 | Virtual image (image) |
| WS | Windshield |

**Claims**

1. Use of a glass plate for a mobile body (10) in a display device being a head-up display device (1A, 1B), in a windshield, in a dashboard, or in a cover glass for a vehicular display device, wherein the glass plate has a bent portion and is to be installed in the mobile body,
wherein the glass plate has an arithmetic mean roughness $Ra_1$ (nm) of a first main surface (11) of the glass plate and an arithmetic mean roughness $Ra_2$ (nm) of a second main surface (12) of the glass plate that satisfy the Relation (1) shown below, and $Ra_1$ is 5 nm or smaller and $Ra_2$ is larger than 5 nm:

$$Ra_2 - Ra_1 > 0.5 \text{ nm} \quad (1).$$

2. Use of the glass plate for a mobile body (10) according to claim 1, wherein $Ra_2$ is 1,000 nm or smaller.

3. Use of the glass plate for a mobile body (10) according to claim 1 or 2, comprising a reflection layer (20) formed on the first main surface (11) or the second main surface (12), wherein the reflection layer (20) has an average spectral reflectance of 85% or larger with respect to a light having a wavelength range of 400 nm or larger and 700 nm or smaller.

4. Use of the glass plate for a mobile body (10) according to claim 3, wherein the reflection layer (20) is formed on the first main surface (11).

5. Use of the glass plate for a mobile body (10) according to claim 1 or 2, comprising a semi-transparent reflection layer formed on the first main surface (11) or the second main surface (12), wherein the semi-transparent reflection layer has an average spectral reflectance of 5% or larger and 25% or smaller with respect to a light having a wavelength range of 400 nm or larger and 700 nm or smaller.

6. Use of the glass plate for a mobile body (10) according to claim 5, wherein the semi-transparent reflection layer is formed on the first main surface (11).

7. Use of the glass plate for a mobile body (10) according to any one of claims 1 to 6, having an arithmetic mean waviness $Wa_1$ (nm) of the first main surface (11) and an arithmetic mean waviness $Wa_2$ (nm) of the second main surface (12), wherein $Wa_1$ is 10 nm or smaller and $Wa_2$ is larger than 10 nm.

8. Use of the glass plate for a mobile body (10) according to claim 7, wherein $Wa_2$ is 500 nm or smaller.

9. Use of the glass plate for a mobile body (10) according to any one of claims 1 to 8, having an average height $Rc_1$ (nm) of the first main surface (11) and an average height $Rc_2$ (nm) of the second main surface (12), wherein $Rc_1$ is 10 nm or smaller and $Rc_2$ is larger than 27 nm.

10. Use of the glass plate for a mobile body (10) according to any one of claims 1 to 9, having an average length $Rsm_1$ (nm) of the first main surface (11) and an average length $Rsm_2$ (nm) of the second main surface (12), wherein $Rsm_1$ is 11 nm or smaller and $Rsm_2$ is larger than 28 nm.

11. Use of the glass plate for a mobile body (10) according to any one of claims 1 to 10, wherein the glass plate for a mobile body (10) is a combiner (3B).

12. Use of the glass plate for a mobile body (10) according to any one of claims 1 to 10, wherein the glass plate for a mobile body (10) is a reflection mirror (2A).

13. A display device comprising a glass plate for a mobile body (10), which has a bent portion and is to be installed in the mobile body, and a projector (91A, 91B),

wherein the glass plate has an arithmetic mean roughness $Ra_1$ (nm) of a first main surface (11) of the glass plate and an arithmetic mean roughness $Ra_2$ (nm) of a second main surface (12) of the glass plate that satisfy the Relation (1) shown below, and $Ra_1$ is 5 nm or smaller and $Ra_2$ is larger than 5 nm:

$$Ra_2 - Ra_1 > 0.5 \text{ nm} \qquad (1),$$

wherein:

the display device is a head-up display device (1A, 1B) in which an image forming light (L1, L2) emitted from the projector (91A, 91B) is reflected by a reflection mirror (2A), projected onto a windshield (WS) of the mobile body, and then displayed on an opposite side of the windshield (WS) to a user (D) as a virtual image;
the glass plate for a mobile body (10) is used as the reflection mirror (2A) and reflects the image forming light (L1, L2) by the first main surface (11); and
the second main surface (12) is fixed to a support member (96A) via an adhesive layer (95A),

or wherein:

the display device is a head-up display device (1A, 1B) in which an image forming light (L1, L2) emitted from the projector (91A, 91B) is projected onto a combiner (3B) and then displayed on an opposite side of the combiner (3B) to a user (D) as a virtual image;
the glass plate for a mobile body (10) is used as the combiner (3B);
the image forming light (L1, L2) is projected onto the first main surface (11); and
the glass plate for a mobile body (10) is disposed such that an outside of the mobile body is viewed through the first main surface (11) and the second main surface (12).

**Patentansprüche**

1. Verwendung einer Glasplatte für einen mobilen Körper (10) in einer Anzeigevorrichtung, die eine Head-up-Anzeigevorrichtung (1A, 1B) ist, in einer Windschutzscheibe, in einem Armaturenbrett oder in einer Abdeckscheibe für eine Fahrzeug-Anzeigevorrichtung, wobei die Glasplatte einen gebogenen Abschnitt aufweist und in den mobilen Körper eingebaut werden soll,
wobei die Glasplatte einen arithmetischen Mittenrauwert $Ra_1$ (nm) einer ersten Hauptoberfläche (11) der Glasplatte und einen arithmetischen Mittenrauwert $Ra_2$ (nm) einer zweiten Hauptoberfläche (12) der Glasplatte aufweist, die die unten gezeigte Beziehung (1) erfüllen, und wobei $Ra_1$ gleich oder kleiner als 5 nm ist und $Ra_2$ größer als 5 nm ist:

$$Ra_2 - Ra_1 > 0,5 \text{ nm (1)}.$$

2. Verwendung der Glasplatte für einen mobilen Körper (10) nach Anspruch 1, wobei $Ra_2$ gleich oder kleiner als 1.000 nm ist.

3. Verwendung der Glasplatte für einen mobilen Körper (10) nach Anspruch 1 oder 2, umfassend eine Reflexionsschicht (20), die auf der ersten Hauptoberfläche (11) oder der zweiten Hauptoberfläche (12) ausgebildet ist, wobei die Reflexionsschicht (20) einen durchschnittlichen spektralen Reflexionsgrad von 85% oder mehr aufweist in Bezug auf ein Licht mit einem Wellenlängenbereich von 400 nm oder größer und 700 nm oder kleiner.

4. Verwendung der Glasplatte für einen mobilen Körper (10) nach Anspruch 3, wobei die Reflexionsschicht (20) auf der ersten Hauptoberfläche (11) ausgebildet ist.

5. Verwendung der Glasplatte für einen mobilen Körper (10) nach Anspruch 1 oder 2, umfassend eine semitransparente Reflexionsschicht, die auf der ersten Hauptoberfläche (11) oder der zweiten Hauptoberfläche (12) ausgebildet ist, wobei die semitransparente Reflexionsschicht einen durchschnittlichen spektralen Reflexionsgrad von 5% oder größer und 25% oder kleiner aufweist in Bezug auf ein Licht mit einem Wellenlängenbereich von 400 nm oder größer und 700 nm oder kleiner.

6. Verwendung der Glasplatte für einen mobilen Körper (10) nach Anspruch 5, wobei die semitransparente Reflexionsschicht auf der ersten Hauptoberfläche (11) ausgebildet ist.

7. Verwendung der Glasplatte für einen mobilen Körper (10) nach einem der Ansprüche von 1 bis 6, mit einer arithmetischen mittleren Welligkeit $Wa_1$ (nm) der ersten Hauptoberfläche (11) und einer arithmetischen mittleren Welligkeit $Wa_2$ (nm) der zweiten Hauptoberfläche (12), wobei $Wa_1$ gleich oder kleiner als 10 nm ist und $Wa_2$ größer als 10 nm ist.

8. Verwendung der Glasplatte für einen mobilen Körper (10) nach Anspruch 7, wobei $Wa_2$ gleich oder kleiner als 500 nm ist.

9. Verwendung der Glasplatte für einen mobilen Körper (10) nach irgendeinem der Ansprüche von 1 bis 8, mit einer mittleren Höhe $Rc_1$ (nm) der ersten Hauptoberfläche (11) und einer mittleren Höhe $Rc_2$ (nm) der zweiten Hauptoberfläche (12), wobei $Rc_1$ gleich oder kleiner 10 nm ist und $Rc_2$ größer als 27 nm ist.

10. Verwendung der Glasplatte für einen mobilen Körper (10) nach irgendeinem der Ansprüche von 1 bis 9, mit einer mittleren Länge $Rsm_1$ (nm) der ersten Hauptoberfläche (11) und einer mittleren Länge $Rsm_2$ (nm) der zweiten Hauptoberfläche (12), wobei $Rsm_1$ gleich oder kleiner 11 nm ist und $Rsm_2$ größer als 28 nm ist.

11. Verwendung der Glasplatte für einen mobilen Körper (10) nach irgendeinem der Ansprüche von 1 bis 10, wobei die Glasplatte für einen mobilen Körper (10) ein Kombinator *(combiner)* (3B) ist.

12. Verwendung der Glasplatte für einen mobilen Körper (10) nach irgendeinem der Ansprüche von 1 bis 10, wobei die Glasplatte für einen mobilen Körper (10) ein Reflexionsspiegel (2A) ist.

13. Eine Anzeigevorrichtung, umfassend eine Glasplatte für einen mobilen Körper (10), die einen gebogenen Abschnitt aufweist und in den mobilen Körper einzubauen ist, und einen Projektor (91A, 91B),

wobei die Glasplatte einen arithmetischen Mittenrauwert $Ra_1$ (nm) einer ersten Hauptoberfläche (11) der Glasplatte und einen arithmetischen Mittenrauwert $Ra_2$ (nm) einer zweiten Hauptoberfläche (12) der Glasplatte aufweist, die die unten gezeigte Beziehung (1) erfüllen, und wobei $Ra_1$ gleich oder kleiner als 5 nm ist und $Ra_2$ größer als 5 nm ist:

$$Ra_2 - Ra_1 > 0,5 \text{ nm (1)},$$

wobei:

die Anzeigevorrichtung eine Head-up-Anzeigevorrichtung (1A, 1B) ist, bei der ein vom Projektor (91A, 91B) emittiertes bilderzeugendes Licht (L1, L2) von einem Reflexionsspiegel (2A) reflektiert, auf eine Windschutzscheibe (WS) des mobilen Körpers projiziert und dann auf einer gegenüberliegenden Seite der Windschutzscheibe (WS) für einen Benutzer (D) als ein virtuelles Bild angezeigt wird;

die Glasplatte für einen mobilen Körper (10) als Reflexionsspiegel (2A) verwendet wird und das bilderzeugende Licht (L1, L2) durch die erste Hauptoberfläche (11) reflektiert; und wobei

die zweite Hauptoberfläche (12) über eine Klebeschicht (95A) an einem Trägerelement (96A) befestigt ist,

oder wobei:

die Anzeigevorrichtung eine Head-up-Anzeigevorrichtung (1A, 1B) ist, bei der ein vom Projektor (91A, 91B) emittiertes bilderzeugendes Licht (L1, L2) auf einen Kombinator *(combiner)* (3B) projiziert und dann auf einer gegenüberliegenden Seite des Kombinators (3B) einem Benutzer (D) als virtuelles Bild angezeigt wird;

die Glasplatte für einen mobilen Körper (10) wird als Kombinator (3B) verwendet;

das bilderzeugende Licht (L1, L2) wird auf die erste Hauptoberfläche (11) projiziert; und wobei

die Glasplatte für einen mobilen Körper (10) so angeordnet ist, dass eine Außenseite des mobilen Körpers durch die erste Hauptoberfläche (11) und die zweite Hauptoberfläche (12) gesehen wird.

## Revendications

1. Utilisation d'une plaque de verre pour un corps mobile (10) dans un dispositif d'affichage étant un dispositif d'affichage tête haute (1A, 1B), dans un pare-brise, dans un tableau de bord, ou dans un verre de couverture pour un dispositif d'affichage de véhicule, sachant que la plaque de verre présente une portion courbée et doit être installée dans le corps mobile,

sachant que la plaque de verre présente une rugosité moyenne arithmétique $Ra_1$ (nm) d'une première surface principale (11) de la plaque de verre et une rugosité moyenne arithmétique $Ra_2$ (nm) d'une deuxième surface principale (12) de la plaque de verre qui satisfont la relation (1) montrée ci-dessous, et que $Ra_1$ est inférieure ou égale à 5 nm et $Ra_2$ est supérieure à 5 nm :

$$Ra_2 - Ra_1 > 0{,}5nm \ (1).$$

2. Utilisation de la plaque de verre pour un corps mobile (10) d'après la revendication 1, sachant que $Ra_2$ est inférieure ou égale à 1000 nm.

3. Utilisation de la plaque de verre pour un corps mobile (10) d'après la revendication 1 ou 2, comprenant une couche de réflexion (20) formée sur la première surface principale (11) ou la deuxième surface principale (12), sachant que la couche de réflexion (20) présente une réflectance spectrale moyenne de 85 % ou plus par rapport à une lumière présentant une gamme de longueurs d'onde de 400 nm ou plus et de 700 nm ou moins.

4. Utilisation de la plaque de verre pour un corps mobile (10) d'après la revendication 3, sachant que la couche de réflexion (20) est formée sur la première surface principale (11).

5. Utilisation de la plaque de verre pour un corps mobile (10) d'après la revendication 1 ou 2, comprenant une couche de réflexion semi-transparente formée sur la première surface principale (11) ou la deuxième surface principale (12), sachant que la couche de réflexion semi-transparente présente une réflectance spectrale moyenne de 5 % ou plus et de 25 % ou moins par rapport à une lumière présentant une plage de longueur d'onde de 400 nm ou plus et de 700 nm ou moins.

6. Utilisation de la plaque de verre pour un corps mobile (10) d'après la revendication 5, sachant que la couche de réflexion semi-transparente est formée sur la première surface principale (11).

7. Utilisation de la plaque de verre pour un corps mobile (10) d'après l'une quelconque des revendications de 1 à 6, présentant une ondulation moyenne arithmétique $Wa_1$ (nm) de la première surface principale (11) et une ondulation moyenne arithmétique $Wa_2$ (nm) de la deuxième surface principale (12), sachant que $Wa_1$ est égale ou inférieure à 10 nm et $Wa_2$ est supérieure à 10 nm.

8. Utilisation de la plaque de verre pour un corps mobile (10) d'après la revendication 7, sachant que $Wa_2$ est inférieure ou égale à 500 nm.

9. Utilisation de la plaque de verre pour un corps mobile (10) d'après l'une quelconque des revendications de 1 à 8, présentant une hauteur moyenne $Rc_1$ (nm) de la première surface principale (11) et une hauteur moyenne $Rc_2$ (nm) de la deuxième surface principale (12), sachant que $Rc_1$ est inférieure ou égale à 10 nm et $Rc_2$ est supérieure à 27 nm.

10. Utilisation de la plaque de verre pour un corps mobile (10) d'après l'une quelconque des revendications de 1 à 9, présentant une longueur moyenne $Rsm_1$ (nm) de la première surface principale (11) et une longueur moyenne $Rsm_2$ (nm) de la deuxième surface principale (12), sachant que $Rsm_1$ est inférieure ou égale à 11 nm et $Rsm_2$ est supérieure à 28 nm.

11. Utilisation de la plaque de verre pour un corps mobile (10) d'après l'une quelconque des revendications de 1 à 10, sachant que la plaque de verre pour un corps mobile (10) est un combineur *(combiner)* (3B).

12. Utilisation de la plaque de verre pour un corps mobile (10) d'après l'une quelconque des revendications de 1 à 10, sachant que la plaque de verre pour un corps mobile (10) est un miroir de réflexion (2A).

13. Un dispositif d'affichage comprenant une plaque de verre pour un corps mobile (10), qui présente une partie courbée et doit être installée dans le corps mobile, et un projecteur (91A, 91B),

sachant que la plaque de verre présente une rugosité moyenne arithmétique $Ra_1$ (nm) d'une première surface principale (11) de la plaque de verre et une rugosité moyenne arithmétique $Ra_2$ (nm) d'une deuxième surface principale (12) de la plaque de verre qui satisfont la relation (1) montrée ci-dessous, et que $Ra_1$ est inférieure ou égale à 5 nm et $Ra_2$ est supérieure à 5 nm :

$$Ra_2 - Ra_1 > 0{,}5\,nm \ (1),$$

sachant que
le dispositif d'affichage est un dispositif d'affichage tête haute (1A, 1B) dans lequel une lumière de formation d'image (L1, L2) émise par le projecteur (91A, 91B) est réfléchie par un miroir de réflexion (2A), projetée sur un pare-brise (WS) du corps mobile, puis affichée sur un côté opposé du pare-brise (WS) à un utilisateur (D) en tant qu'image virtuelle ;
la plaque de verre pour un corps mobile (10) est utilisée comme miroir de réflexion (2A) et réfléchit la lumière de formation d'image (L1, L2) par la première surface principale (11) ; et que
la deuxième surface principale (12) est fixée à un élément de support (96A) via une couche adhésive (95A), ou sachant que
le dispositif d'affichage est un dispositif d'affichage tête haute (1A, 1B) dans lequel une lumière de formation d'image (L1, L2) émise par le projecteur (91A, 91B) est projetée sur un combineur *(combiner)* (3B) puis affichée sur un côté opposé du combineur (3B) à un utilisateur (D) en tant qu'image virtuelle ;
(3B) ; la plaque de verre pour un corps mobile (10) est utilisée comme combineur
la lumière de formation d'image (L1, L2) est projetée sur la première surface principale (11) ; et que
la plaque de verre pour un corps mobile (10) est disposée de manière qu'un extérieur du corps mobile est vu à travers la première surface principale (11) et la deuxième surface principale (12).

Fig. 1

(A)

10

20 (30)

11

12

(B)

10

20 (30)

11

12

20 (30)

11

12

Fig. 2

Fig. 3

Fig. 4

Fig. 5

Fig. 6

(A)

Shaping evaluation index φ

(B)

Shaping evaluation index φ

Fig. 7

(A)

(B)

Fig. 8

Fig. 9

(A)

(B)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009269762 A
- JP 2011138589 A
- JP 2016037446 A
- JP 2004131347 A
- JP 2005170766 A